# EUROPEAN PATENT SPECIFICATION

(11) **EP 3 181 906 B1**
(45) Date of publication and mention of the grant of the patent: **03.07.2019**
(21) Application number: 16204927.4
(22) Date of filing: 19.12.2016
(51) Int. Cl.: F04C 11/00, F01D 17/06, F01D 17/20, F02K 9/80, F04D 13/04, F04D 15/00

(54) **HYDRAULIC PUMP SYSTEMS**
HYDRAULIKPUMPENSYSTEME
SYSTÈMES DE POMPE HYDRAULIQUE

(30) Priority: 17.12.2015 US 201514972902
(43) Date of publication of application: 21.06.2017
(73) Proprietor: Hamilton Sundstrand Corporation, Charlotte, NC 28217 (US)
(72) Inventor: HIMMELMANN, Richard A., Beloit, WI Wisconsin 53511 (US)
(74) Representative: Dehns

(56) References cited:
- US-A- 2 752 858
- US-A- 2 778 312
- US-A- 2 879 716
- US-A- 5 003 772

## Description

### BACKGROUND

### 1. Field

The present disclosure relates to pump systems, more specifically to hydraulic pump systems (e.g., for rockets).

### 2. Description of Related Art

For nearly 80 years, engineers and scientists have been using rockets to launch payloads into orbit around the earth. These rockets are maneuvered by vectoring the rocket engine thrust direction. The thrust vector control (TVC) system for many of today's rockets relies on hydraulic rams to displace the engine nozzle angle, relative to the rocket core axis. These hydraulic rams require high pressure hydraulic fluid pumping systems capable of providing up to 276 bar absolute (4000 psia) at flow rates of more than 0,38 m³/min (100 gpm) for example.

This hydraulic flow and pressure is typically generated by a Turbine Pump Assembly (TPA). Traditional TPAs can be powered by hot combustion products or high pressure cold gas provided by the main engine turbo-pump assembly. Typically the TPA turbine operates most efficiently at very high rpm (e.g., 115,000 rpm in certain TPAs). This is in contrast to the hydraulic pump which needs to operate at much lower speeds (e.g., about 6100 rpm in certain cases) and is relatively expensive. Also, the turbine rotational speed is controlled by a turbine speed control valve (e.g., with a flyweight governor actuated spool valve), which also operates at a lower RPM to control flow to the turbine.

To accommodate the differences in operating speed between the turbine and the hydraulic pump/turbine speed control valve, a gear reduction system is incorporated between the hydraulic pump/valve and the turbine. The gear reduction systems of traditional systems must be geared properly and must be robust enough to transfer power to both the hydraulic pump and valve mechanically linked thereto. Accordingly, traditional systems are large, complex, expensive, and require high part count.

Pump systems are taught in US 2,778,312 and US 5,003,772.

Such conventional methods and systems have generally been considered satisfactory for their intended purpose. However, there is still a need in the art for improved pump systems. The present disclosure provides a solution for this need.

### SUMMARY

A pump system includes a turbine shaft including a turbine disposed thereon to rotate the turbine shaft at a turbine shaft speed due to fluid flow through the turbine, a centrifugal pump directly connected to the turbine shaft and configured to pump hydraulic fluid at the turbine shaft speed, a bleed port disposed downstream of the centrifugal pump, and a valve configured to be fluidly connected to the bleed port and configured to meter flow to the turbine to regulate the turbine shaft speed at least partially as a function of pressure from the bleed port.

The valve can include a valve piston disposed therein and configured to move a valve shaft at least partially toward a closed position at a closure pressure from the bleed port. The centrifugal pump can be disposed at an opposite end of the turbine shaft relative to the turbine.

The pump system further includes a speed reduction system operatively connected to the turbine shaft and configured to have an output speed less than the turbine shaft speed. The valve is operatively connected to the speed reduction system and configured to operate at the output speed such that the valve meters flow to the turbine to regulate the turbine shaft speed at least partially as a function of the output speed of the speed reduction system.

The speed reduction system includes a turbine shaft gear operatively disposed on the turbine shaft. The speed reduction system includes a valve gear operatively disposed around a valve shaft of the valve to rotate the valve shaft at the output speed. The valve gear houses a flyweight governor of the valve disposed around the valve shaft.

The speed reduction system can include a first stage gear meshed with the turbine shaft gear. The speed reduction system can include a second stage gear connected to the first stage gear and configured to rotate at a first stage gear speed. The second stage gear can be meshed with the valve gear to rotate the valve gear.

The turbine can be configured to operate with cold rocket fuel or any other suitable fluid. For example, the turbine can be configured to operate with hot gas.

In accordance with at least one aspect of this disclosure, a hydraulic steering system for a rocket nozzle can include a hydraulic mechanism configured to modify a thrust vector of a nozzle and a pump system as described above.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1A is a perspective view of a pump system described by way of background only;
Fig. 1B is a partial cutaway view of the system of Fig. 1A, showing a speed reduction system;
Fig. 1C is a partial cutaway view of the system of Fig. 1A from a different angle;
Fig. 1D is a cross-sectional elevation view of the system of Fig. 1A, showing a cross-section through the turbine shaft and the valve shaft;
Fig. 1E is a cross-sectional perspective view of the system of Fig. 1A, showing a cross-section through the turbine shaft and the second gear of the speed reduction system;
Fig. 1F is a cross-sectional perspective view of the system of Fig. 1A, showing a cross-section through the second gear of the speed reduction system and the valve shaft;
Fig. 2A is a perspective view of an example of a pump system that does not form part of the claimed invention.
Fig. 2B is a phantom perspective view of the system of Fig. 2A, showing a valve shown in accordance with this example;
Fig. 2C is a cross-sectional elevation view of the system of Fig. 2A, showing a cross-section through the turbine shaft and the valve shaft;
Fig. 2D is a cross-sectional perspective view of an example of the valve of the system of Fig. 2A, shown operatively connected to a bleed port of a pump in accordance with this example;
Fig. 2E is a side elevation view of the system of Fig. 2A;
Fig. 3A is a perspective view of an example of a pump system that does not form part of the claimed invention, shown including a combination valve
Fig. 3B is a cross-sectional elevation view of the system of Fig. 3A, showing a cross-section through the valve shaft and a second stage gear;
Fig. 3C is a cross-sectional elevation view of the system of Fig. 3A, showing a cross-section through the valve shaft and the turbine shaft;
Fig. 4 is side by side comparison of the system of Fig. 2A and a traditional system; and
Fig. 5 is a partial perspective view of a hydraulic steering system for a rocket nozzle.

### DETAILED DESCRIPTION

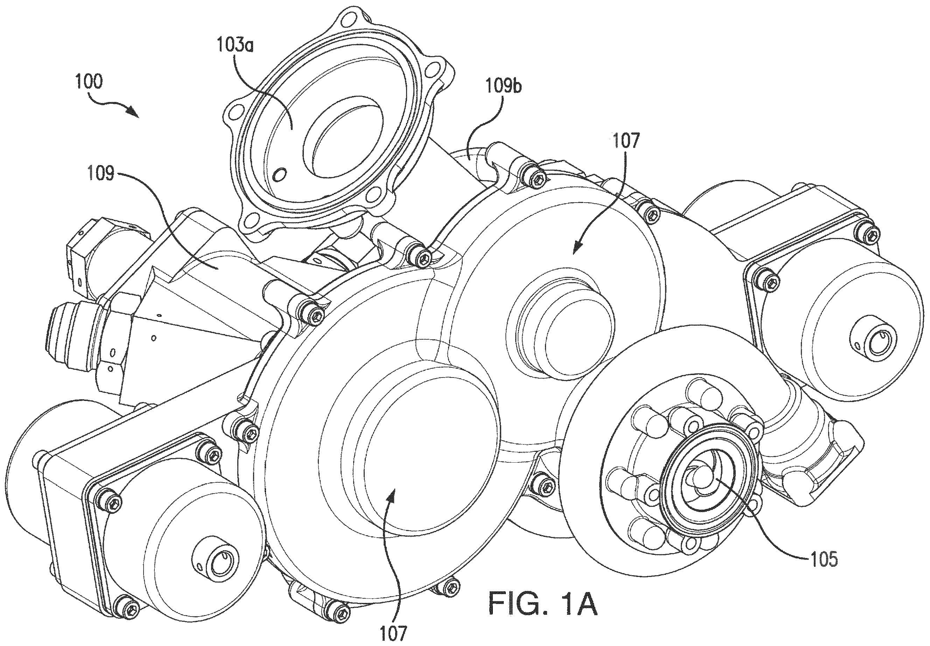

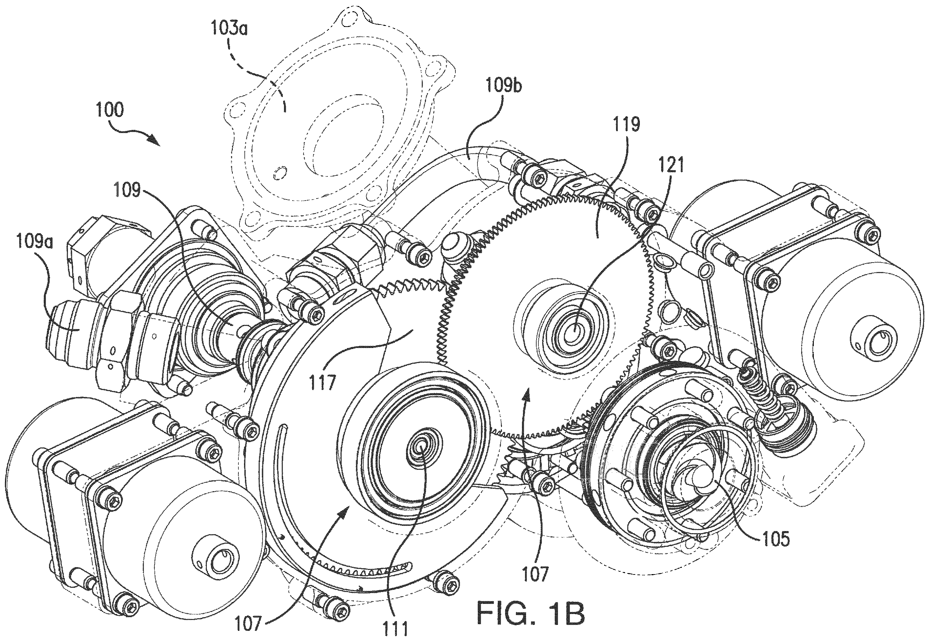

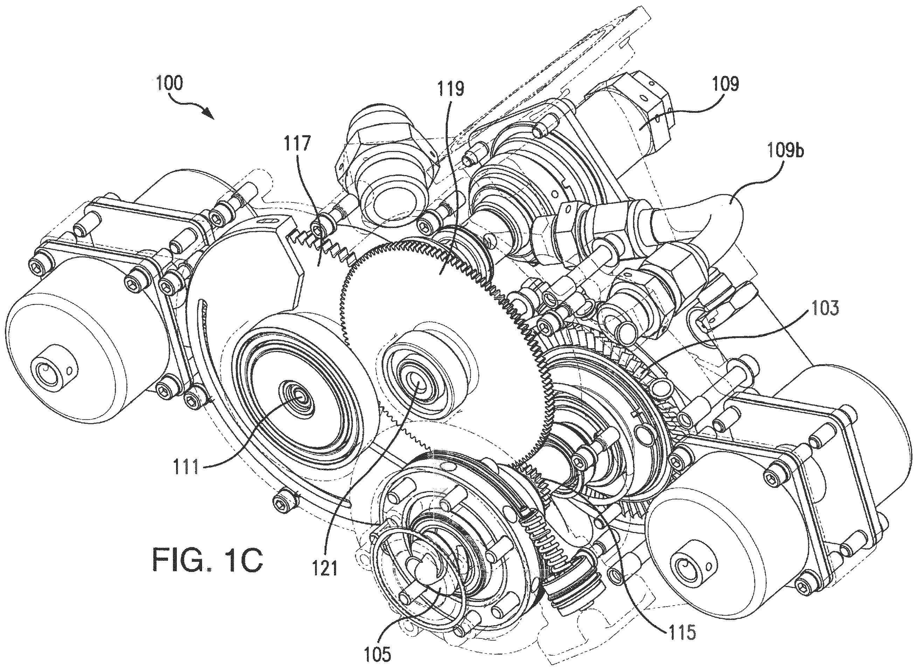

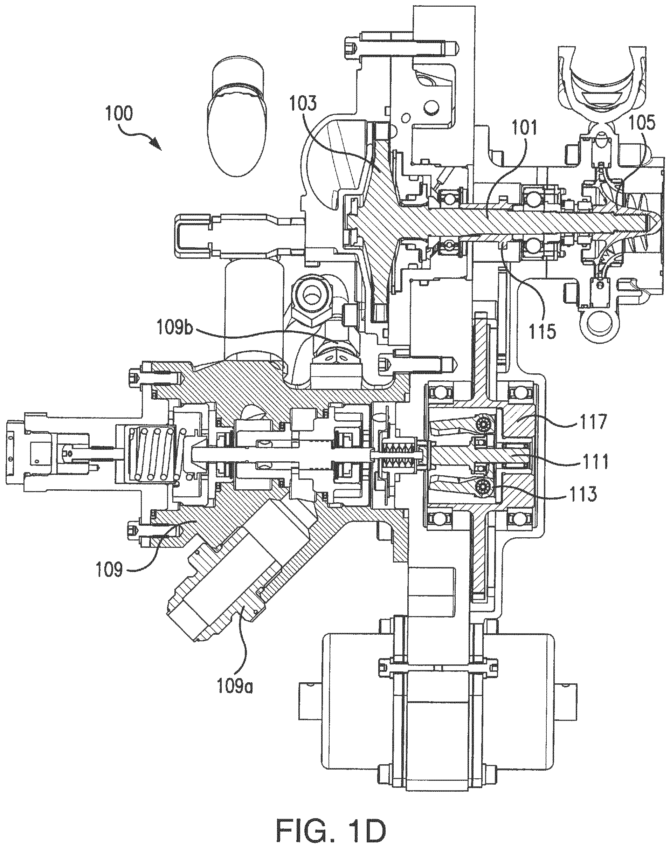

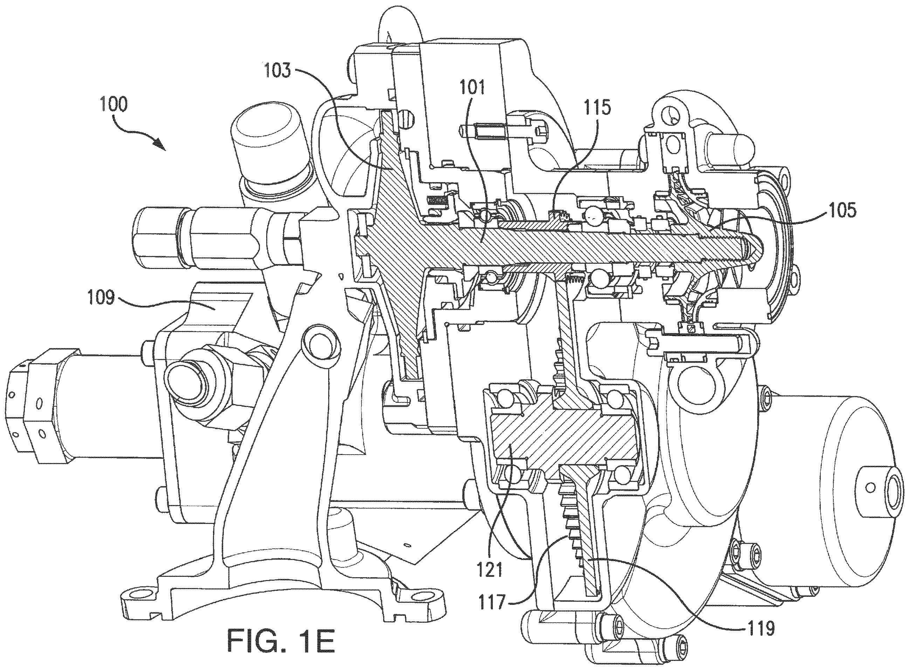

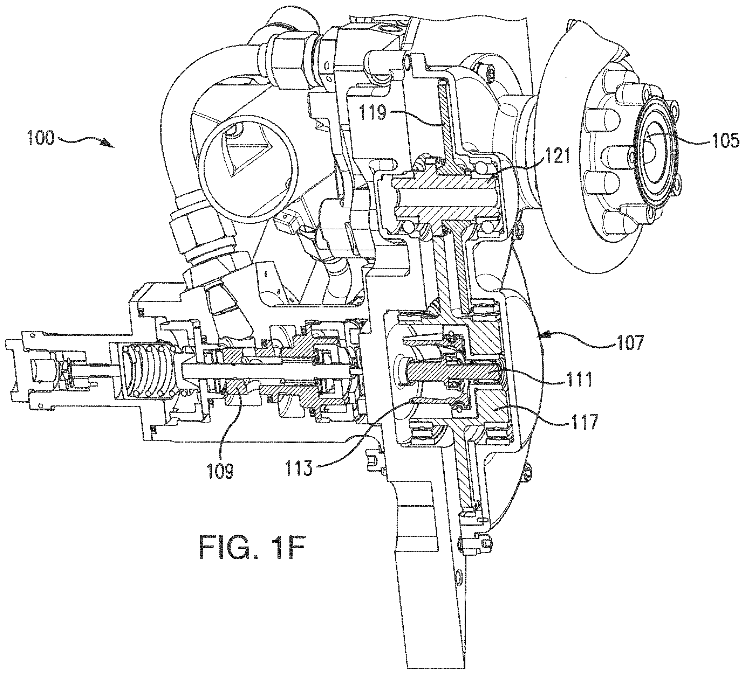

Reference will now be made to the drawings wherein like reference numerals identify similar structural features or aspects of the subject disclosure. For purposes of explanation and illustration, and by way of background only, an illustrative view of a system is shown in Fig. 1A and is designated generally by reference character 100. Other non-claimed examples are shown in Figs. 1B-5. The systems and methods described herein can be used to reduce the size, weight, and cost of pumping systems (e.g., for rockets).

Referring to Figs. 1A-1F, a pump system 100 includes a turbine shaft 101 including a turbine 103 disposed thereon to rotate the turbine shaft 101 at a turbine shaft speed due to fluid flow through the turbine 103. The turbine 103 can be configured to operate with cold (e.g., gaseous) rocket fuel. In certain embodiments, the turbine 103 can be configured to operate with hot gas (e.g., exhaust). It is contemplated that the turbine 103 can be configured to operate with any other suitable fluid.

The system 100 further includes a centrifugal pump 105 directly connected to the turbine shaft 101 and configured to pump hydraulic fluid at the turbine shaft speed. As shown, the centrifugal pump 105 can be disposed at an opposite end of the turbine shaft 101 relative to the turbine 103, however, any other suitable location is contemplated herein. The centrifugal pump 105 is configured to be in fluid communication with a hydraulic fluid source and a suitable hydraulic mechanism (e.g., for steering a rocket nozzle).

The pump system 100 also includes a speed reduction system 107 operatively connected to the turbine shaft 101. The speed reduction system 107 is configured to have an output speed less than the turbine shaft speed.

A valve 109 is operatively connected to the speed reduction system 107 that is configured to operate at the slower speed output by the speed reduction system 107. The valve 109 is configured to meter flow to the turbine 103 to regulate the turbine shaft speed. The valve 109 includes and inlet portion 109a configured to be in fluid communication with a pressurized fluid source and an outlet portion 109b in fluid communication with the turbine 103. The valve 109 selectively allows flow from the inlet 109a to the outlet 109b to pass through the turbine 103, thereby rotating the turbine 103 and passing through a turbine outlet 103a.

The valve 109 is a flyweight governor type valve including a valve shaft 111 and a flyweight assembly 113 that is configured to move the valve 109 toward a closed position when rotated above a predetermined speed in order to keep the turbine shaft 101 spinning at or below a desired speed.

As shown, the speed reduction system 107 includes a turbine shaft gear 115 operatively disposed on the turbine shaft 101. The speed reduction system 107 also includes a valve gear 117 operatively disposed around the valve shaft 111 of the valve 109 to rotate the valve shaft 111 at the output speed. As shown, the valve gear 117 houses a flyweight governor assembly 113 of the valve 109 that is disposed around the valve shaft 111.

The speed reduction system 107 can include a first stage gear 119 meshed with the turbine shaft gear 115. The speed reduction system 107 can include a second stage gear 121 connected to the first stage gear 119 and configured to rotate at a first stage gear speed with the first stage gear 119. The second stage gear 121 can be meshed with the valve gear 117 to rotate the valve gear 117. This relationship creates a two stage speed reduction from the turbine shaft 101 to the valve shaft 111.

As A described above, certain non-claimed examples not forming part of the invention as described above do not need speed reduction to the pump assembly because a centrifugal pump 105 is utilized in direct mechanical relationship with the turbine shaft 101. In this regard, the faster the turbine shaft 101 is allowed to spin, the smaller the centrifugal pump 105 needs to be. Also, since the pump requires power transfer and the valve does not require much at all, traditional systems had to utilize large, robust gear systems with many more components. In examples as described herein, no significant power has to be transferred through the speed reduction system 107 which allows a significant reduction in the size, weight, complexity, and cost of such pump systems (e.g., that can be used for hydraulic pumping on for rocket nozzle steering).

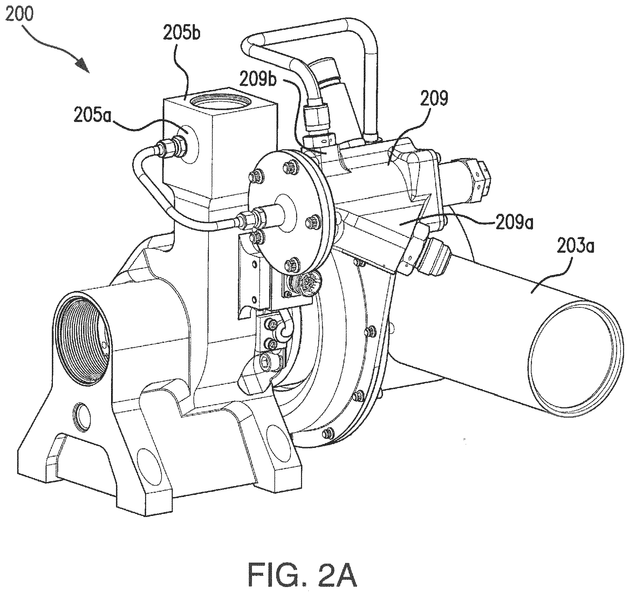

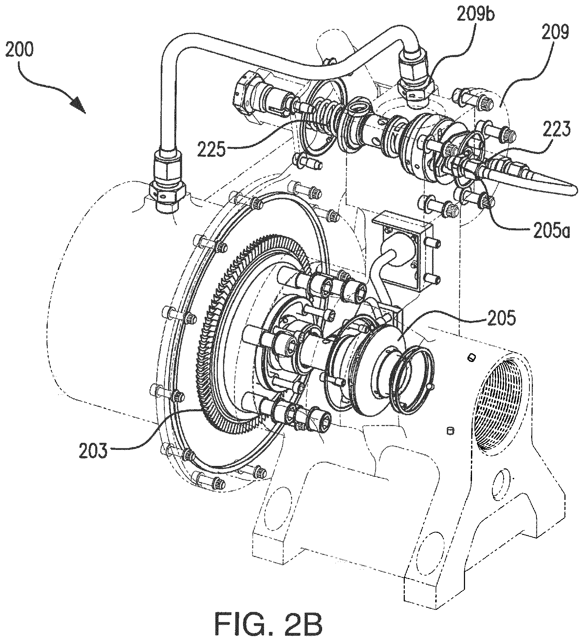

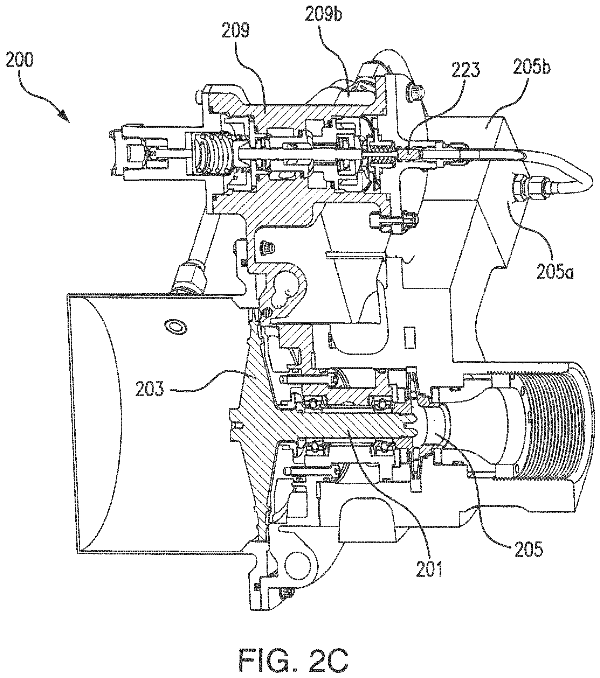

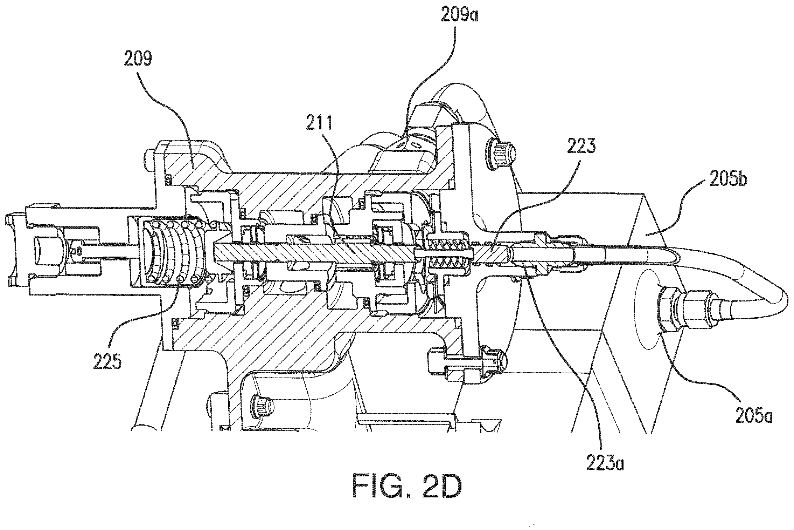

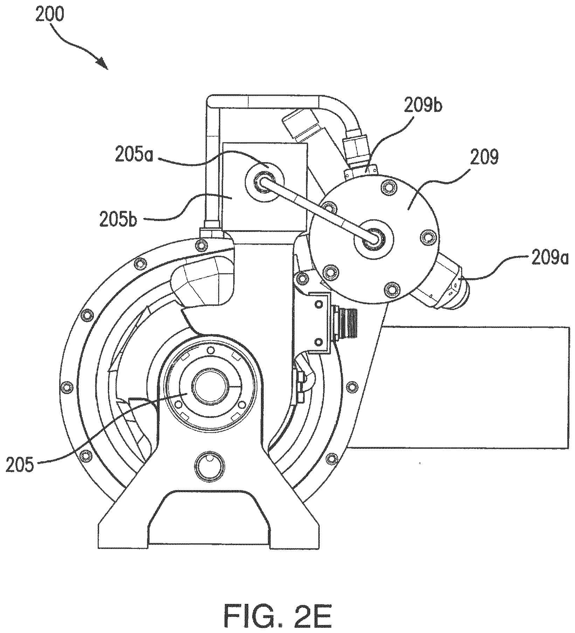

Referring to Figs. 2A-2E, a pump system 200 according to a non-claimed example not forming part of the claimed invention can include certain similar features and/or operate similarly as system 100 as described above, having a pressure actuated valve 209 and no speed reduction system. For example, the system 200 can include a turbine shaft 201 including a turbine 203 disposed thereon to rotate the turbine shaft 201 at a turbine shaft speed due to fluid flow through the turbine 203, similar to the above described components of system 100.

Similar to the system 100 as described above, the system 200 also includes a centrifugal pump 205 directly connected to the turbine shaft 201 and configured to pump hydraulic fluid at the turbine shaft speed. As shown, the centrifugal pump 205 can be disposed at an opposite end of the turbine shaft 201 relative to the turbine 203.

The system 200 further includes a bleed port 205a disposed downstream of the centrifugal pump 205 (e.g., in pump outlet 205b as shown). The valve 209 is configured to be fluidly connected to the bleed port 205a and is configured to meter flow to the turbine 203 (from inlet portion 209a to outlet portion 209b, similar to valve 109 as described above) to regulate the turbine shaft speed at least partially as a function of pressure from the bleed port 205a.

The valve 209 can include a valve piston 223 disposed therein (e.g., in a piston cavity 223a defined by the valve 209) and configured to move a valve shaft 211 of the valve 209 at least partially toward a closed position at a predetermined closure pressure from the bleed port 205a. As shown, the valve 209 can include a biasing member 225 (e.g., a spring) configured to provide a biasing force to the valve shaft 211 toward the open position (e.g., similar to the embodiment as shown in Fig. 1A). Any other suitable components for the valve 209 are contemplated herein.

In this regard, as shown, the more pressure that is produced by the centrifugal pump 205, the more the valve piston 223 forces the valve shaft 211 toward the closed position, against the biasing force of the biasing member 225, to ultimately regulate the speed of the turbine 203 and centrifugal pump 205 without the need for a geared connection to the turbine shaft 201. This can allow the valve 209 to be simplified and an overall reduction of weight due to a reduction in components of system 200 (e.g., removal of speed reduction gears, flyweights, etc.) in comparison to traditional systems.

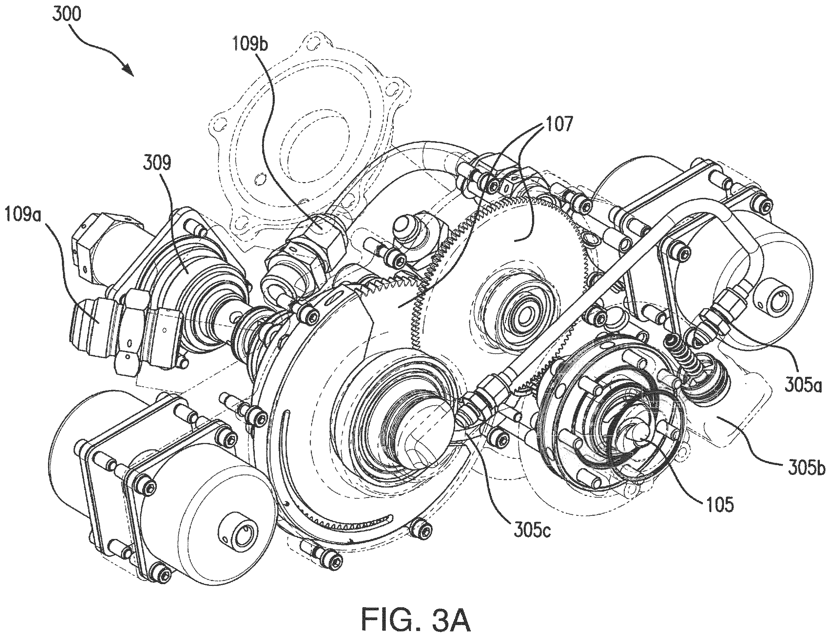

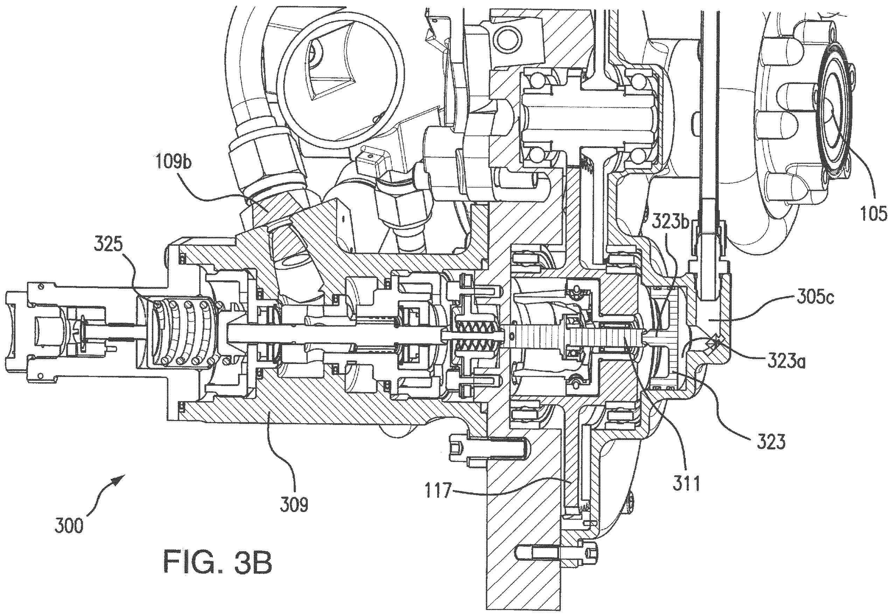

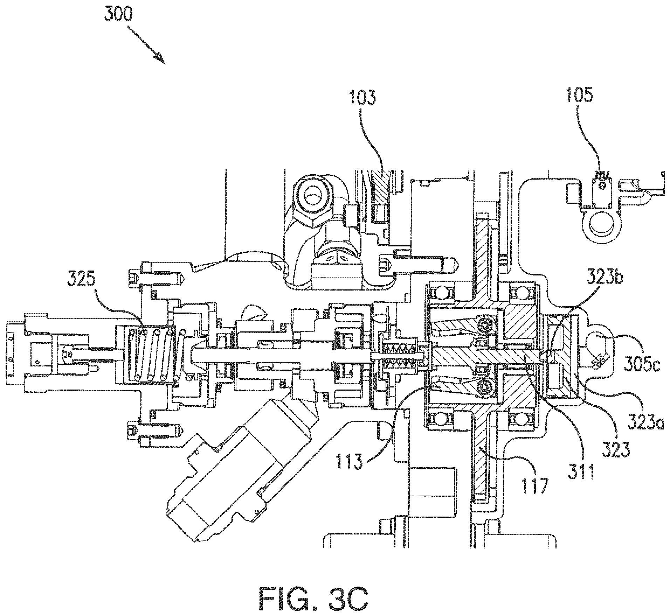

While the non-claimed exemplary embodiment of Figs. 2A-2E shows a pressure actuated valve 209 configured to operate without rotation, it is contemplated that pressure actuation can be implemented in any suitable manner, including in embodiments of valves that operate with rotation (e.g., as in valve 109 of system 100). For example, referring to Figs. 3A-3C, a system 300 includes similar components (e.g., turbine shaft 101, turbine 103, centrifugal pump 105, speed reduction system 107) with a valve 309 similar to valve 109 and having the addition of pressure actuation.

As shown, the valve 309 can be operatively connected to the speed reduction system 107 to operate at the slower speed output by the speed reduction system 107, similar to valve 109, and can include similar features to those of valve 109 as described above (e.g. inlet portion 109a, outlet portion 109b, a flyweight governor assembly 103 disposed around valve shaft 311).

The system 300 further includes a bleed port 305a disposed downstream of the centrifugal pump 105 (e.g., in pump outlet 305b as shown). The valve 309 is configured to be fluidly connected to the bleed port 305a and is configured to meter flow to the turbine 103 (from inlet portion 109a to outlet portion 109b, similar to valve 109 as described above) to regulate the turbine shaft speed at least partially as a function of pressure from the bleed port 305a.

The valve 309 can include a valve piston 323 disposed therein. The valve piston 323 can be disposed in a piston cavity 323a defined by any suitable portion of system 300 (e.g., valve 309 and/or a cover 305c of speed reduction system 107 as shown). The valve piston 323 is configured to move a valve shaft 311 of the valve 309 at least partially toward a closed position at a predetermined closure pressure from the bleed port 305a.

In the non-claimed exemplary embodiment shown, valve shaft 311 and valve piston 323 can move in the axial direction and do not rotate. As shown, the valve gear 117 rotates about the valve shaft 311 on at least one bearing that support the valve shaft 311 (which doesn't rotate) within the rotating valve gear 117. In certain non-claimed exemplary embodiments, however, the valve shaft can rotate relative to the valve piston 323.

The valve piston 323 can also include a pintle portion 323b configured to register the valve piston 323 with the valve shaft 311 in a slidable abutment about the axis of the valve shaft 311 such that the valve shaft 311 can rotate without rotating the valve piston 323. The pintle portion 323b can reduce in size to reduce friction from the rotation of the valve shaft 311 relative to the pintle portion 323b.

As shown, the valve 309 can include a biasing member 325 (e.g., a spring) configured to provide a biasing force to the valve shaft 311 toward the open position (e.g., similar to the embodiment as shown in Fig. 1A). Any other suitable components for the valve 309 are contemplated herein.

As shown in Figs. 3A-3C, the more pressure that is produced by the centrifugal pump 105, the more the valve piston 323 forces the valve shaft 311 toward the closed position, against the biasing force of the biasing member 325, to ultimately regulate the speed of the turbine 303 and centrifugal pump 305. However, rotation from the turbine shaft 101 through the speed reduction system 107 can also be used in conjunction with or alternative to the pressure actuation to actuate the valve 309, as described above with respect to valve 109 (e.g., using the flyweight governor assembly 113 to actuate valve shaft 311).

Any suitable distribution of effect between the rotational component of actuation and the pressure component of actuation is contemplated herein. For example, the valve 309 can be configured to operate mostly based on pressure from the bleed port 305a which can allow for reduction of the size and/or weight of the flyweight governor assembly 113 required to fully operate the valve 309. Alternatively, it is contemplated that either the rotational component or the pressure component can be independently capable of fully operating the valve 309 independently of the other component. The valve 309 can allow redundant systems for safety and/or allow for an overall reduction of weight due to a reduction in size and/or complexity of certain components (e.g., flyweight governor assembly) in comparison to traditional systems.

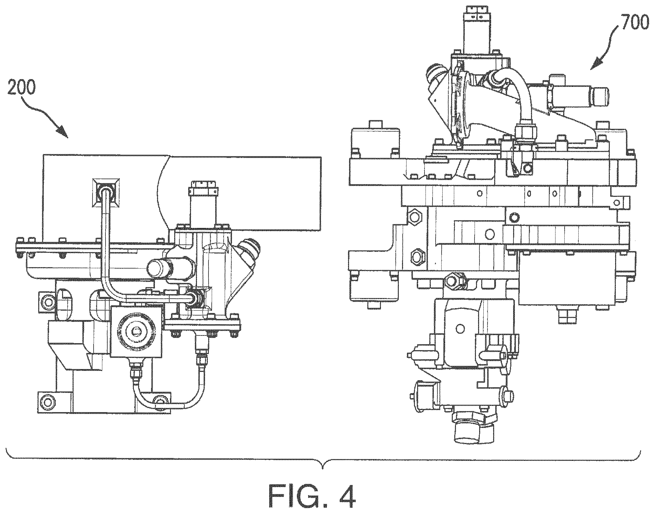

As an example of size reduction of certain embodiments in accordance with this disclosure, referring to Fig. 4, the pump system 200 is shown next to a traditional pump 700 having a geared pump assembly with similar pumping output. It can clearly be seen that there is a significant reduction in size and weight which is beneficial for rocket systems as it increases available payload.

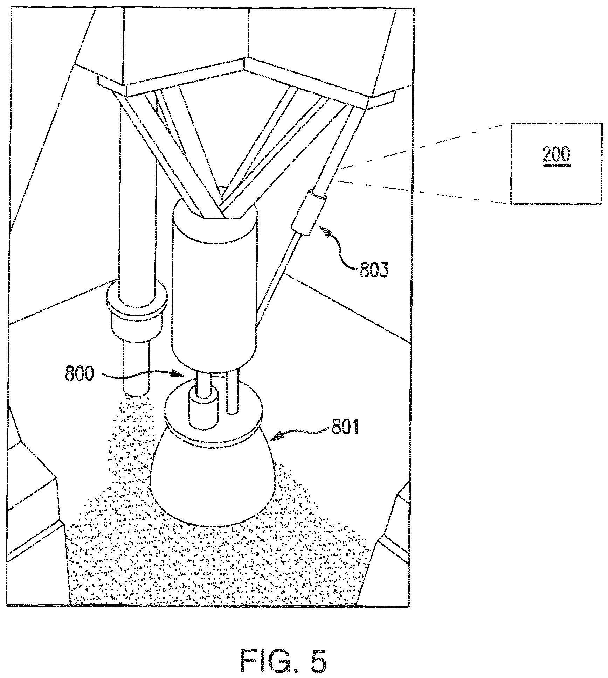

Referring to Fig. 5, a hydraulic steering system 800 for a rocket nozzle 801 can include a hydraulic mechanism 803 configured to modify a thrust vector of the nozzle 801 and an embodiment of a pump system (e.g., pump systems 200, 300) as described above operatively connected to the hydraulic mechanism 803 to supply the hydraulic mechanism 803 with hydraulic fluid.

The methods and systems of the present disclosure, as described above and shown in the drawings, provide for pump systems with superior properties including reduced size, weight, complexity, and/or cost. While the apparatus and methods of the subject disclosure have been shown and described with reference to embodiments, those skilled in the art will readily appreciate that changes and/or modifications may be made thereto without departing from the scope of the subject invention as defined by the claims.

## Claims

1. A pump system, comprising:
a turbine shaft (101) including a turbine (103) disposed thereon to rotate the turbine shaft at a turbine shaft speed due to fluid flow through the turbine;
a centrifugal pump (105) directly connected to the turbine shaft and configured to pump hydraulic fluid at the turbine shaft speed;
a bleed port (205a) disposed downstream of the centrifugal pump;
a valve (109) configured to be fluidly connected to the bleed port and configured to meter flow to the turbine to regulate the turbine shaft speed at least partially as a function of pressure from the bleed port; and
further comprising a speed reduction system (107) operatively connected to the turbine shaft and configured to have an output speed less than the turbine shaft speed, wherein the valve is operatively connected to the speed reduction system and configured to operate at the output speed, wherein the valve is configured to meter flow to the turbine to regulate the turbine shaft speed at least partially as a function of the output speed;
**characterised in that** the speed reduction system includes a turbine shaft gear (115) operatively disposed on the turbine shaft and a valve gear (117) operatively disposed around a valve shaft of the valve to rotate the valve shaft at the output speed; and
wherein the valve gear houses a flyweight governor (113) of the valve disposed around the valve shaft such that the flyweight governor (113) is configured to move the valve (109) toward a closed position when rotated above a predetermined speed in order to keep the turbine shaft (101) spinning at or below a desired speed.

2. The pump system of claim 1, wherein the valve includes a valve piston (223) disposed therein and configured to move a valve shaft (211) at least partially toward a closed position at a closure pressure from the bleed port.

3. The pump system of claim 1, wherein the speed reduction system further includes a first stage gear (119) meshed with the turbine shaft gear.

4. The pump system of claim 3, wherein the speed reduction system further includes a second stage gear (121) connected to the first stage gear and configured to rotate at a first stage gear speed, wherein the second stage gear is meshed with the valve gear to rotate the valve gear.

5. The pump system of any preceding claim, wherein the turbine is configured to operate with cold rocket fuel.

6. The pump system of any of claims 1 to 4, wherein the turbine is configured to operate with hot gas.

7. The pump system of any preceding claim, wherein the centrifugal pump is disposed at an opposite end of the turbine shaft relative to the turbine.

8. A hydraulic steering system for a rocket nozzle, comprising:
a hydraulic mechanism (803) configured to modify a thrust vector of a nozzle (801); and
a pump system (200, 300) as claimed in any preceding claim.

## Patentansprüche

1. Pumpensystem, umfassend:
eine Turbinenwelle (101), die eine Turbine (103) umfasst, die daran angebracht ist, um die Turbinenwelle mit einer Turbinenwellendrehzahl aufgrund der Fluidströmung durch die Turbine zu drehen;
eine Zentrifugalpumpe (105), die direkt mit der Turbinenwelle verbunden ist und konfiguriert ist, um Hydraulikfluid mit der Turbinenwellendrehzahl zu pumpen;
einen Ablassanschluss (205a), der der Zentrifugalpumpe nachgeschaltet angeordnet ist;
ein Ventil (109), das konfiguriert ist, um in Fluidverbindung mit dem Ablassanschluss zu stehen, und konfiguriert ist, um die Strömung zur Turbine zu dosieren, um die Turbinenwellendrehzahl mindestens teilweise abhängig von dem Druck aus dem Ablassanschluss zu regulieren; und
ferner umfassend ein Drehzahlverminderungssystem (107), das in Wirkverbindung mit der Turbinenwelle steht und konfiguriert ist, um eine Ausgangsdrehzahl aufzuweisen, die niedriger als die Turbinenwellendrehzahl ist, wobei das Ventil in Wirkverbindung mit dem Drehzahlverminderungssystem steht und konfiguriert ist, um bei der Ausgangsdrehzahl zu arbeiten, wobei das Ventil konfiguriert ist, um die Strömung zur Turbine zu dosieren, um die Turbinenwellendrehzahl zumindest teilweise abhängig von der Ausgangsdrehzahl zu regulieren;
**dadurch gekennzeichnet, dass**
das Drehzahlverminderungssystem ein Turbinenwellenrad (115), das wirkmäßig an der Turbinenwelle angeordnet ist, und ein Ventilrad (117) umfasst, das wirkmäßig um einen Ventilschaft des Ventils angeordnet ist, um den Ventilschaft mit der Ausgangsdrehzahl zu drehen; und
wobei das Ventilrad einen Fliehkraftregler (113) des Ventils umfasst, der so um den Ventilschaft angeordnet ist, dass der Fliehkraftregler (113) konfiguriert ist, um das Ventil (109) in Richtung auf eine geschlossene Position zu bewegen, wenn er oberhalb einer vorgegebenen Drehzahl gedreht wird, um die Turbinenwelle (101) mit oder unter einer gewünschten Drehzahl am Drehen zu halten.

2. Pumpensystem nach Anspruch 1, wobei das Ventil einen Ventilkolben (223) umfasst, der darin angeordnet ist und konfiguriert ist, um einen Ventilschaft (211) mindestens teilweise in Richtung auf eine geschlossene Position bei einem Schließdruck von dem Ablassanschluss zu bewegen.

3. Pumpensystem nach Anspruch 1, wobei das Drehzahlverminderungssystem ferner ein Rad der ersten Stufe (119) umfasst, das in das Turbinenwellenrad eingreift.

4. Pumpensystem nach Anspruch 3, wobei das Drehzahlverminderungssystem ferner ein Rad der zweiten Stufe (121) umfasst, das mit dem Rad der ersten Stufe verbunden ist und konfiguriert ist, um sich mit einer Drehzahl des Rads der ersten Stufe zu drehen, wobei das Rad der zweiten Stufe in das Ventilrad eingreift, um das Ventilrad zu drehen.

5. Pumpensystem nach einem der vorstehenden Ansprüche, wobei die Turbine konfiguriert ist, um mit kaltem Raketentreibstoff zu arbeiten.

6. Pumpensystem nach einem der Ansprüche 1 bis 4, wobei die Turbine konfiguriert ist, um mit Heißgas zu arbeiten.

7. Pumpensystem nach einem der vorstehenden Ansprüche, wobei die Zentrifugalpumpe an einem entgegengesetzten Ende der Turbinenwelle bezogen auf die Turbine angeordnet ist.

8. Hydraulisches Lenksystem für eine Raketendüse, umfassend:
einen hydraulischen Mechanismus (803), der konfiguriert ist, um einen Schubvektor einer Düse (801) zu modifizieren; und
ein Pumpensystem (200, 300) nach einem der vorstehenden Ansprüche.

## Revendications

1. Système de pompe, comprenant :
un arbre de turbine (101) incluant une turbine (103) disposée sur ce dernier pour faire tourner l'arbre de turbine selon une vitesse d'arbre de turbine due à un flux de fluide à travers la turbine ;
une pompe centrifuge (105) directement connectée à l'arbre de turbine et configurée pour pomper un fluide hydraulique à la vitesse de l'arbre de turbine ;
un orifice de purge (205a) disposé en aval de la pompe centrifuge ;
une soupape (109) configurée pour être en communication fluidique avec l'orifice de purge et configurée pour mesurer le flux vers la turbine afin de réguler la vitesse de l'arbre de turbine au moins partiellement en fonction d'une pression provenant de l'orifice de purge ; et
comprenant en outre un système de réduction de la vitesse (107) connecté de manière opérationnelle à l'arbre de turbine et configuré pour avoir une vitesse de sortie inférieure à la vitesse de l'arbre de turbine, dans lequel la soupape est connectée de manière opérationnelle au système de réduction de la vitesse et configurée pour fonctionner à la vitesse de sortie, dans lequel la soupape est configurée pour mesurer le flux vers la turbine afin de réguler la vitesse de l'arbre de turbine au moins partiellement en fonction de la vitesse de sortie ;
**caractérisé en ce que** le système de réduction de la vitesse inclut un engrenage d'arbre de turbine (115) disposé de manière opérationnelle sur l'arbre de turbine et une commande de soupape (117) disposée de manière fonctionnelle autour d'une tige de soupape de la soupape pour faire tourner la tige de soupape à la vitesse de sortie ; et
dans lequel la commande de soupape loge un régulateur de masselotte (113) de la soupape disposé autour de l'arbre de soupape de sorte que le régulateur de masselotte (113) est configuré pour déplacer la soupape (109) vers une position fermée lorsqu'une vitesse de rotation prédéterminée est dépassée afin de maintenir la rotation de l'arbre de turbine (101) à une vitesse souhaitée ou en dessous.

2. Système de pompe selon la revendication 1, dans lequel la soupape inclut un piston de soupape (223) disposé dans cette dernière et configuré pour déplacer un arbre de soupape (211) au moins partiellement vers une position fermée au niveau d'une pression de fermeture provenant de l'orifice de purge.

3. Système de pompe selon la revendication 1, dans lequel le système de réduction de la vitesse inclut en outre un engrenage primaire (119) engrené avec l'engrenage d'arbre de turbine.

4. Système de pompe selon la revendication 3, dans lequel le système de réduction de la vitesse inclut en outre un engrenage secondaire (121) connecté à l'engrenage primaire et configuré pour tourner à une vitesse d'engrenage primaire, dans lequel l'engrenage secondaire s'engrène avec la commande de soupape pour faire tourner la commande de soupape.

5. Système de pompe selon une quelconque revendication précédente, dans lequel la turbine est configurée pour fonctionner avec du carburant pour fusée froid.

6. Système de pompe selon l'une quelconque des revendications 1 à 4, dans lequel la turbine est configurée pour fonctionner avec du gaz chaud.

7. Système de pompe selon une quelconque revendication précédente, dans lequel la pompe centrifuge est disposée au niveau d'une extrémité opposée de l'arbre de turbine par rapport à la turbine.

8. Système de guidage hydraulique pour une tuyère de fusée, comprenant :
un mécanisme hydraulique (803) configuré pour modifier un vecteur de poussée d'une tuyère (801) ; et
un système de pompe (200, 300) selon une quelconque revendication précédente.
